# FASCICULE DE BREVET EUROPEEN

(11) **EP 3 172 548 B1**
(45) Date de publication et mention de la délivrance du brevet: **26.09.2018**
(21) Numéro de dépôt: 15762729.0
(22) Date de dépôt: 23.07.2015
(51) Int. Cl.: G01M 3/00

(54) **PROCÉDÉ POUR DÉTECTER DES ANOMALIES DANS UN RÉSEAU DE DISTRIBUTION, EN PARTICULIER D'EAU POTABLE**
VERFAHREN ZUR DETEKTION VON ANOMALIEN IN EINEM VERTEILUNGSNETZWERK, INSBESONDERE FÜR TRINKWASSER
METHOD FOR DETECTING ANOMALIES IN A DISTRIBUTION NETWORK, IN PARTICULAR FOR DRINKING WATER

(30) Priorité: 25.07.2014 FR 1457209
(43) Date de publication de la demande: 31.05.2017
(73) Titulaire: SUEZ Groupe, 92040 Paris la Défense Cedex (FR)
(72) Inventeur: CAMPAN, Francis, F-92160 Antony (FR); DEMBELE, Abel, 69120 Vaulx en Velin (FR); CUSSONNEAU, Guillaume, F-75009 Paris (FR)
(74) Mandataire: IPAZ
(86) Numéro de dépôt international: PCT/IB2015/055583
(87) Numéro de publication internationale: WO 2016/012972

(56) Documents cités:
- EP-A1- 2 477 020
- US-A- 5 866 803

## Description

### Domaine de l'Invention

La présente invention concerne un procédé pour détecter des anomalies dans un réseau de distribution, en particulier distribution d'un fluide newtonien, encore plus particulièrement un réseau d'approvisionnement en eau potable.

La performance opérationnelle est au coeur de la gestion des systèmes d'approvisionnement en eau potable. Le niveau de performance peut être sensiblement amélioré grâce à des outils de détection et localisation d'anomalies hydrauliques sur les réseaux de transport et de distribution d'eau potable.
L'invention peut être utilisée pour tous les réseaux de fluides newtoniens, par exemple les réseaux urbains de chaleur et de climatisation.
On connaît pour la détection d'anomalies des méthodes de détection d'anomalies basées sur des techniques statistiques, telles que l'analyse du débit minimal d'un secteur du réseau, largement utilisée par les exploitants de réseaux d'eau potable. Ces méthodes ne permettent pas toujours de caractériser ni de localiser l'anomalie.

On connaît aussi des méthodes de détection basées sur des modèles hydrauliques. Ces méthodes basées sur des équations hydrauliques utilisent une modélisation du réseau, qui n'est pas toujours disponible. La détection et la localisation d'anomalie combinent des outils mathématiques et des mesures physiques, ce qui implique la mise en place d'une densité d'instrumentation adéquate.

Le brevet EP2477020 donne un exemple de méthode de détection d'anomalies connu de l'art antérieur.

Le but de l'invention est de proposer un procédé de détection d'anomalies qui soit performant tout en étant peu exigeant en données d'entrée et relativement économique en termes de puissance de traitement informatique.

Suivant l'invention, le procédé pour détecter des anomalies dans un réseau de distribution, en particulier distribution d'un fluide newtonien, encore plus particulièrement un réseau d'approvisionnement en eau potable, le réseau de distribution étant équipé de capteurs, procédé dans lequel on acquiert pour chaque capteur une série temporelle de mesures physiques séparées par des intervalles de temps, est caractérisée par les étapes suivantes :
- définir des fenêtres temporelles correspondant chacune à plusieurs intervalles de temps,
- extraire des caractéristiques opérationnelles de chaque série temporelle dans chaque fenêtre de temps,
- former au moins un vecteur courant pour chaque fenêtre temporelle ayant pour coordonnées les caractéristiques opérationnelles, des données structurelles relatives au réseau et des caractéristiques conjoncturelles propres à la fenêtre temporelle,
- comparer le vecteur courant avec des vecteurs précédents, correspondant à des fenêtres temporelles précédentes, et dont les caractéristiques conjoncturelles et les données structurelles sont semblables à celles du vecteur courant,
- signaler une anomalie dans des cas où le vecteur courant est significativement dissemblable desdits vecteurs précédents.
Pour la comparaison du vecteur courant avec les vecteurs précédents, on définit un paramètre de sensibilité correspondant à un degré minimal de dissimilitude en dehors duquel le vecteur courant est qualifié de significativement dissemblable.

L'intervalle de temps entre deux mesures d'une série temporelle est par exemple de quelques minutes, par exemple 3 mn.

Une fenêtre temporelle est typiquement d'une journée ou d'une semaine. Ainsi une série temporelle comprend typiquement de nombreuses mesures. On peut avantageusement mettre en oeuvre le procédé simultanément pour des fenêtres temporelles de durées différentes.

Pendant une fenêtre temporelle, les paramètres mesurés par les capteurs, et constituant les séries temporelles, subissent des variations, par exemple en fonction de paramètres conjoncturels tels que l'heure, le jour de la semaine, la saison, la météorologie, etc., de données structurelles du réseau, comme par exemple fermeture d'une vanne, arrêt d'une pompe, et aussi en fonction d'une ou plusieurs anomalies sur le réseau.

Suivant l'invention on forme un vecteur ayant des dimensions représentatives des séries temporelles, des dimensions représentatives des paramètres conjoncturels, et des dimensions représentatives des données structurelles.

L'idée qui est à la base de l'invention est que si les dimensions représentatives des paramètres conjoncturels et des données structurelles ont été pertinemment choisies, les vecteurs ayant sensiblement les mêmes coordonnées pour les dimensions conjoncturelles et structurelles devraient aussi avoir sensiblement les mêmes coordonnées pour les dimensions opérationnelles. Dans le cas contraire on signale une anomalie.

Compte-tenu du nombre typiquement grand des valeurs numériques dans chaque série temporelle, le procédé devrait traiter des vecteurs ayant un très grand nombre de dimensions si toutes ces valeurs numériques devenaient chacune une coordonnée d'une dimension respective du vecteur. Ainsi, une autre idée qui est à la base de l'invention consiste à extraire des caractéristiques de chaque série temporelle, et ensuite à utiliser ces caractéristiques pour des coordonnées du vecteur.

Les caractéristiques extraites des séries temporelles peuvent comprendre des maximums, des minimums et/ou des moyennes, et/ou encore des fréquences élémentaires, obtenues en particulier par décomposition des séries temporelles en séries de Fourier. Certains paramètres conjoncturels ou données structurelles, par exemple la température ambiante ou l'état d'une vanne, peuvent également être disponibles sous forme de série temporelle que l'on traite pour en extraire des caractéristiques qui constitueront des coordonnées du vecteur en lieu et place des mesures ou données brutes.

Pour l'extraction de caractéristiques, on peut même agréger des séries temporelles de mesures. On peut par exemple faire l'addition des consommations connues d'après la télé-relève, et obtenir ainsi une mesure unique totale, ou encore une série temporelle des consommations totales, par exemple une mesure par jour dans le cas d'une fenêtre temporelle d'une semaine.

De manière avantageuse, certaines caractéristiques conjoncturelles sont au moins en partie basées sur des hypothèses issues de l'expérience. Par exemple, on peut disposer des tendances sur la consommation d'eau chez un particulier en fonction de l'heure, du jour de la semaine, de la saison, de la température extérieure, de la pluviométrie, du nombre d'occupants de l'habitation etc.

Dans un mode de mise en oeuvre avantageux, en cas d'anomalie, on compare le vecteur courant avec au moins un vecteur précédent ayant des caractéristiques conjoncturelles et des données structurelles semblables, et des caractéristiques opérationnelles aussi proches que possible du vecteur courant, et on signale au moins une caractéristique opérationnelle pour laquelle le vecteur courant présente un grand écart avec ledit au moins un vecteur précédent.

De préférence, on traite par un logiciel de caractérisation d'anomalies les situations ayant donné lieu à la signalisation d'au moins une anomalie. Un tel logiciel fonctionne de façon bien plus efficace lorsqu'il ne traite que des situations triées comme anormales avec en outre des informations déjà disponibles sur les paramètres (ou coordonnées de vecteur) présentant une valeur anormale.

Le résultat, anomalie d'un vecteur ou anomalie de réseau déterminée après traitement par un logiciel de caractérisation comme indiqué ci-dessus, est de préférence fourni par référence à une échelle de gravité de l'anomalie. Ayant quantifié la gravité d'anomalie, en cas de plusieurs anomalies simultanées, on peut prioriser les anomalies les unes par rapport aux autres en fonction de leur urgence et/ou en fonction de l'ampleur de l'intervention corrective correspondante.

Dans un mode de mise en oeuvre préféré, un vecteur exempt d'anomalies est classé dans un même compartiment de mémoire que d'autres vecteurs sensiblement équipollents, et chaque fois qu'un vecteur courant a été calculé on recherche le compartiment de mémoire contenant les vecteurs antérieurs qui lui ressemblent le plus, et on ne compare le vecteur courant qu'avec les vecteurs précédents de ce compartiment. On réduit ainsi la puissance de traitement nécessaire et le délai d'obtention des résultats.

On crée un nouveau compartiment de mémoire pour un vecteur dont les coordonnées conjoncturelles et/ou les coordonnées correspondant à des données structurelles du réseau ne correspondent à aucun compartiment existant. Par exemple une météorologie exceptionnellement fraîche pour un mois d'été peut donner lieu à la création d'un nouveau compartiment.

Il est avantageux d'analyser l'évolution dans le temps des vecteurs d'un même compartiment, et de fournir des informations sur l'évolution du réseau. On peut ainsi, par exemple, révéler des fuites initialement faibles mais ayant tendance à s'aggraver et pouvant devenir importantes, alors que la simple recherche du vecteur le plus semblable dans le compartiment ne révèlera pas la fuite croissante, puisque le vecteur précédent le plus récent paraîtra très semblable et conduira à conclure à l'absence d'anomalie.

Dans une version encore plus perfectionnée, on compare les évolutions dans les différents compartiments, et on fournit des informations qui différencient l'évolution de l'état du réseau et l'évolution des conséquences des paramètres conjoncturels sur le réseau. Par exemple une consommation qui n'augmente que les jours de forte chaleur indique une évolution des habitudes des consommateurs plutôt qu'un réseau de plus en plus grevé de fuites.

Pour alléger le traitement et affiner les résultats, il est très avantageux de fournir pour chaque fenêtre temporelle plusieurs vecteurs correspondant chacun à un sous-réseau respectif faisant partie du réseau. Ainsi on traite des vecteurs plus petits et on se donne des chances supplémentaires de localiser plus facilement une anomalie.

En cas de détection d'une anomalie on analyse comparativement le vecteur courant avec des vecteurs récents comparablement anormaux, pour fournir des indications sur une vitesse d'évolution de l'anomalie et/ou un lien de l'anomalie avec au moins un paramètre conjoncturel et/ou une donnée structurelle.

En cas d'anomalie, on peut également rechercher dans les vecteurs précédents des anomalies comparables ayant donné lieu à un diagnostic, pour fournir un pré-diagnostic de la cause de l'anomalie courante.

Lors d'une étape d'initialisation, on peut avantageusement selon l'invention charger une mémoire avec des vecteurs reconstitués d'après des archives relatives au réseau.

Les composantes d'un vecteur incluent de préférence au moins une composante relative aux plaintes des consommateurs desservis par le réseau, par exemple sur le débit, la pression, le goût etc..

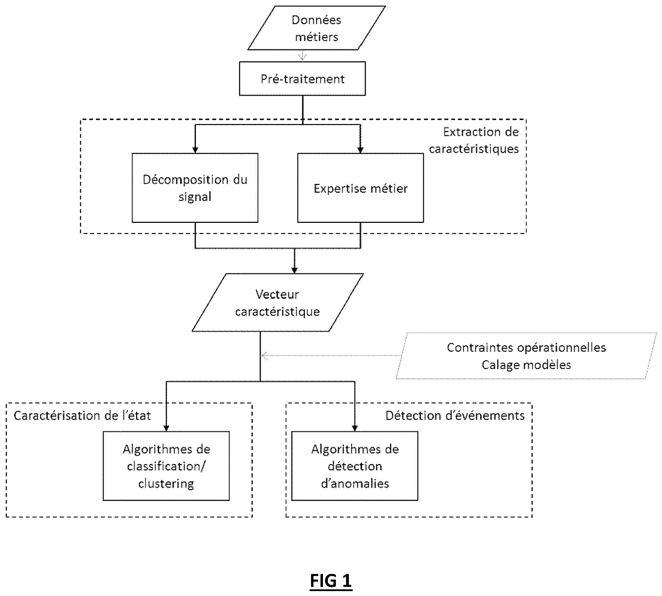

D'autres particularités et avantages de l'invention ressortiront encore de la description ci-après, relative à des exemples non-limitatifs, et en référence à la figure 1 qui représente un organigramme des étapes principales dans l'exemple décrit.

### Observation préliminaire

La description qui suit vaut description de toute particularité qu'elle contient, qu'elle soit prise isolément des autres particularités même faisant partie du même paragraphe ou de la même phrase, et vaut description de toute combinaison de telles particularités, dès lors qu'une telle particularité ou combinaison de particularités est distinctive de l'état de la technique et offre un effet technique, que ce soit seule ou en combinaison avec des concepts présentés ci-dessus, et que cette particularité soit exprimée dans les termes même de cette description ou dans des termes plus ou moins généralisés.

### Définitions

Entité : Réseau d'eau potable ou composante du système d'approvisionnement en eau potable, par exemple les secteurs hydrauliques ou les appareils de mesure/capteurs. A une entité sont associées une ou plusieurs séries temporelles.
Série temporelle : séquence finie de données scalaires indexées par le temps, généralement espacées d'une durée constante.
Classification : Sans autre précision, désigne le processus aboutissant à assigner à un état d'une entité une classe connue donnant lieu à des actions prédéterminées de la part de l'opérateur de réseau.
Génération de classification (« Clustering ») : Sans autre précision, désigne le processus aboutissant à associer à un état d'une entité un groupe d'états antérieurs afin d'en déterminer le caractère anormal ou nouveau.
Mesure : C'est l'estimation de la valeur d'une grandeur en unité correspondant, ces valeurs formant une série temporelle fournie par un système d'acquisition de données. Une mesure est associée à un composant élémentaire particulier du réseau d'eau potable (arc ou tronçon pour une mesure de débit, noeud pour une mesure de pression, réservoir pour une mesure de niveau).
Données de télé-relève : série d'index de consommation pour un compteur, mesurés à une périodicité donnée, et télé transmise par exemple au moins une fois par jour.
Caractéristique : (« feature ») scalaire ou vecteur constituant une information significative pour le processus étudié, ici l'état du réseau sur une fenêtre temporelle donnée.

### Principes

Dans ce mode réalisation l'invention met en oeuvre les principes suivants :
- Le prétraitement du signal par les méthodes de l'état de l'art permettant de le compléter et de le nettoyer du bruit.
- La production d'un vecteur de caractéristiques de l'état de fonctionnement d'une entité pour une fenêtre temporelle donnée. Celle-ci se fait par agrégation :
   ∘ de caractéristiques extraites principalement des séries temporelles de l'entité par des méthodes de décomposition/traitement du signal,
   ∘ de caractéristiques issues d'indicateurs de performance métier et de données conjoncturelles.
- L'utilisation d'algorithmes de classification et de « clustering », issus des techniques d'auto-apprentissage machine (« machine learning »), appliqués aux vecteurs caractéristiques des entités pour une fenêtre temporelle donnée. Ceci permet ensuite la transcription des états des entités (tels que représentés par les vecteurs caractéristiques) en des catégories connues des exploitants de réseaux, afin de classer les situations et de prioriser les actions correctives à mener. Les algorithmes de classification/clustering sont calés sur des fonctions-objectifs et des contraintes opérationnelles de gestion du réseau, par exemple l'effectif disponible pour une opération d'entretien simple, le délai pour disposer d'une équipe pour une opération plus complexe, le délai entre la date d'apparition d'une anomalie et la date de sa détection, etc.
- L'utilisation optionnelle de données de contexte influençant le fonctionnement de l'entité, pour préciser la description de son état.
- L'utilisation d'algorithmes de détection/évaluation («detection/scoring ») d'anomalies issus des techniques d'autoapprentissage machine (« machine learning »), calées/optimisées à l'aide de critères répondant aux contraintes opérationnelles des exploitants de réseau. Ces algorithmes sont appliqués aux vecteurs de caractéristiques.

Données d'entrée et paramétrage : trois ensembles de données :
Les données structurelles sont constituées des données descriptives de l'infrastructure du réseau et des équipements installés (vannes, capteurs, pompes, etc.).
Les paramètres de mise en oeuvre de la méthode sont calés de manière automatique dans une phase préparatoire, elle-même automatisée afin de permettre un recalage lorsque le système détecte une perte de performance ou une évolution de son infrastructure.
Les données opérationnelles sont issues de l'ensemble des systèmes de mesure présents sur le réseau. Lorsqu'elles sont disponibles ces données incluront, entre autres, aussi les données de consommation télé-relevées, les plaintes clientèles et les interventions ayant une incidence sur le comportement du réseau.

### Méthodes élémentaires (Voir Figure 1)

### Prétraitement des séries temporelles des mesures

Ces méthodes permettent d'obtenir des séries temporelles des mesures éventuellement complétées, lissées/nettoyées du bruit. Les séries temporelles résultantes sont alors prêtes à être utilisées comme données d'entrée des algorithmes d'extraction de caractéristiques.

Des combinaisons des séries en signaux agrégés sont également réalisées. Par exemple la somme algébrique des séries temporelles de débits d'entrée/sortie d'un secteur hydraulique est convertie en série de consommations du secteur hydraulique.

Les séries peuvent également être transformées (par exemple centrées réduites) pour les besoins de certains des algorithmes utilisés dans les phases d'extraction de caractéristiques.

### Extraction des caractéristiques issues de la décomposition du signal

Cette méthode consiste à utiliser les séries temporelles précédemment nettoyées/lissées comme décrit ci-dessus, pour en extraire l'information pertinente permettant de caractériser de manière opérationnelle l'état d'une entité. Il s'agit de produire les informations résumant la structure des séries (décomposition de Fourier, en ondelettes, en composantes principales, ...) tout en en diminuant la dimension afin de concentrer la partie pertinente des signaux.

Les différentes bases de décomposition sont évaluées de manière périodique afin de suivre les performances des algorithmes et de mettre à jour les bases quand celles-ci sont jugées trop peu parcimonieuses (supervision).

Les sorties de ces algorithmes sont donc des vecteurs de caractéristiques résumant chaque signal dans une fenêtre temporelle définie par l'exploitant de réseau.

### Extraction des caractéristiques métier

La construction des caractéristiques métier d'un site est automatisée et s'appuie sur :
- un référentiel de caractéristiques établies à partir de l'expérience de réseaux de différents types,
- une observation de la structure et du comportement du réseau ciblé.

La construction peut s'appuyer par exemple sur un calcul des minimums d'un paramètre sur une fenêtre temporelle donnée, l'observation de la périodicité des cycles de remplissage/vidange des réservoirs, le niveau de consommation moyen des compteurs télé-relevés en fonction de leur segment de consommateur, etc..

### Algorithmes d'évaluation de l'état de fonctionnement de l'entité - régime de fonctionnement

Selon une particularité importante de l'invention, pour décrire l'état de fonctionnement du réseau, on combine des données issues de l'expertise métier avec celles issues des méthodes de décomposition du signal. Celles-ci viennent s'enrichir mutuellement en donnant en sortie pour chaque entité un vecteur caractérisant complètement un état de fonctionnement de cette entité pour le réseau considéré.

A l'aide des vecteurs de caractéristiques, l'état de fonctionnement de l'entité considérée à un temps donné dans une fenêtre temporelle donnée, ou « régime », peut être caractérisé. Il peut alors être comparé aux états antérieurs, ou aux états des autres entités, et classé selon des critères opérationnels impliquant des actions à engager. Pour réaliser ce classement, les outils de machine learning tels que la classification et le clustering peuvent être mis en oeuvre.

Dans le cas de la classification, un processus d'apprentissage aura préalablement permis, à l'aide de données historiques marquées avec les différents états possibles et constituant des groupes, d'entraîner une fonction discriminante (« classifier »), qui permet de donner automatiquement le groupe auquel le nouvel état appartient.

Cette fonction discriminante peut être obtenue par optimisation d'un critère de qualité, par exemple une fonction d'inertie en mode non supervisé ou le proxy d'une erreur de classification en mode supervisé.

Dans le cas d'une absence de données historiques marquées, les techniques de génération de classification (« clustering ») permettent de grouper les états selon des critères de ressemblance et ainsi de discriminer ceux qui appartiennent aux catégories les moins représentées.

Celles-ci présentent un intérêt pour l'opérateur de réseau puisqu'elles indiquent un comportement qui sort de l'ordinaire. L'opérateur peut alors focaliser son attention sur cette entité.

### Algorithmes de détection d'anomalies

Aux vecteurs de caractérisation d'état sont appliqués des algorithmes de détection d'anomalies. Il s'agit de caractériser un événement en cours ou récemment terminé. Le type d'événement correspond à une catégorie d'événements suivis par les opérateurs de réseaux d'eau potable (fuites, chute de pression, panne de capteur, anomalie de consommation, etc.).

Les algorithmes de détection sont lancés en parallèle et leurs résultats sont agrégés pour la discrimination des entités présentant un comportement anormal. Ils ont été préalablement calés sur des jeux de données historiques, afin d'adapter leurs paramétrages aux contraintes opérationnelles du réseau.

### Particularités corollaires

L'ensemble constitué par les composants exposés plus haut peut être connecté au système d'information technique de l'opérateur d'un système d'approvisionnement en eau potable. Chaque source de données disponible est alors connectée à l'algorithme d'extraction de caractéristiques qui lui est dédié. L'ensemble peut être activé régulièrement, selon la fréquence d'acquisition des données. La fenêtre temporelle sur laquelle se fait l'analyse est réglable par l'utilisateur. Il est néanmoins pertinent d'utiliser en première approche des fenêtres temporelles de 24 heures et 7 jours.

Dans ces conditions la caractérisation de l'état de fonctionnement du réseau et la détection d'anomalies associée sont beaucoup plus pertinentes qu'avec les méthodes habituellement utilisées, et l'efficacité opérationnelle en est considérablement améliorée.

Dans la phase de diagnostic des événements passés d'un réseau, à des fins de bilan d'exploitation par exemple, la méthode permet de gagner un temps considérable en discriminant les situations passées événementielles.

La combinaison des caractéristiques liées aux signaux et des caractéristiques métier améliore la robustesse de la détection d'anomalie.

Le réglage de la sensibilité de l'algorithme, c'est-à-dire l'équilibre entre le nombre de détections justes et le nombre d'anomalies pour chaque entité, permet, par exemple, d'adapter la détection de chaque type d'anomalie à la capacité de l'exploitant à planifier et engager les actions correctives.

### Exemple de réalisation : Exemple chlore et décomposition de signal

L'utilisation d'une méthode de décomposition du signal, telle que décomposition en ondelettes ou de Fourier, sur des signaux relatifs à un réseau d'eau potable, permet d'isoler les différentes composantes (intra et inter jour) de ces signaux. Un algorithme d'analyse cognitive de ces composantes, en relation avec l'expertise métier, aboutit à identifier le domaine de définition du fonctionnement normal du réseau. Ceci permet, lorsque de nouveaux signaux sont disponibles, de détecter les changements significatifs dans la nature de ces composantes.

Ainsi, un écart significatif observé peut être interprété comme indicateur de comportement anormal. Un second ensemble d'algorithmes de recherche peut alors être exécuté. Par exemple, un algorithme de classification sur la base des vecteurs de caractéristiques (incluant les plaintes clients par exemple) peut aider à définir le niveau de risque atteint.

Cette approche peut être appliquée pour la surveillance de la qualité de l'eau en utilisant l'ensemble des points de mesure disponibles sur un réseau d'eau potable afin d'identifier les structures cachées et détecter, par exemple, des anomalies sur la concentration résiduelle de chlore en conjonction ou pas avec d'autres paramètres qualité. Les plaintes clients utilisées sont alors relatives au goût de l'eau.

## Revendications

1. Procédé pour détecter des anomalies dans un réseau de distribution, en particulier distribution d'un fluide newtonien, encore plus particulièrement un réseau d'approvisionnement en eau potable, le réseau de distribution étant équipé de capteurs, procédé dans lequel on acquiert pour chaque capteur une série temporelle de mesures physiques séparées par des intervalles de temps, **caractérisé par** les étapes suivantes :
- définir des fenêtres temporelles correspondant chacune à plusieurs intervalles de temps,
- extraire des caractéristiques opérationnelles de chaque série temporelle dans chaque fenêtre de temps,
- former pour chaque fenêtre temporelle au moins un vecteur courant ayant pour coordonnées les caractéristiques opérationnelles, des données structurelles relatives au réseau et des caractéristiques conjoncturelles propres à la fenêtre temporelle,
- comparer le vecteur courant avec des vecteurs précédents, correspondant à des fenêtres temporelles précédentes, et dont les caractéristiques conjoncturelles et les données structurelles sont semblables à celles du vecteur courant, et
- signaler une anomalie dans des cas où le vecteur courant est significativement dissemblable desdits vecteurs précédents.

2. Procédé selon la revendication 1, dans lequel pour la comparaison du vecteur courant avec les vecteurs précédents on règle une sensibilité définissant un degré minimal de dissimilitude pour que le vecteur courant soit qualifié de significativement dissemblable.

3. Procédé selon la revendication 1 ou 2, dans lequel pour l'extraction de caractéristiques, on agrège des séries temporelles de mesures.

4. Procédé selon l'une des revendications 1 à 3, dans lequel les caractéristiques conjoncturelles sont au moins en partie basées sur des hypothèses issues de l'expérience.

5. Procédé selon l'une des revendications 1 à 4, dans lequel en cas d'anomalie, on compare le vecteur courant avec au moins un vecteur précédent ayant des caractéristiques conjoncturelles semblables et des caractéristiques opérationnelles aussi proches que possible du vecteur courant, et on signal au moins une caractéristique opérationnelle pour laquelle le vecteur courant présente un grand écart avec ledit au moins un vecteur précédent.

6. Procédé selon l'une des revendications 1 à 5, dans lequel on fournit le résultat par référence à une échelle de gravité de l'anomalie.

7. Procédé selon l'une des revendications 1 à 6, dans lequel en cas de plusieurs anomalies simultanées on priorise les anomalies en fonction de leur urgence et/ou en fonction de l'ampleur de l'intervention corrective correspondante.

8. Procédé selon l'une des revendications 1 à 7, dans lequel un vecteur exempt d'anomalies est classé dans un même compartiment de mémoire que d'autres vecteurs sensiblement équipollents, et chaque fois qu'un vecteur courant a été calculé on recherche le compartiment de mémoire contenant les vecteurs antérieurs qui lui ressemblent le plus, et on ne compare le vecteur courant qu'avec les vecteurs précédents de ce compartiment.

9. Procédé selon la revendication 8, dans lequel on crée un nouveau compartiment de mémoire pour un vecteur dont les coordonnées conjoncturelles et/ou les coordonnées correspondant à des données structurelles du réseau ne correspondent à aucun compartiment existant.

10. Procédé selon l'une des revendications 1 à 9, dans lequel on analyse l'évolution dans le temps des vecteurs d'un même compartiment, et on fournit des informations sur l'évolution du réseau.

11. Procédé selon la revendication 10, dans lequel on compare les évolutions dans les différents compartiments, et on fournit des informations qui différencient l'évolution de l'état du réseau et l'évolution des conséquences des paramètres conjoncturels sur le réseau.

12. Procédé selon l'une des revendications 1 à 11, dans lequel on fournit pour chaque fenêtre temporelle plusieurs vecteurs correspondant chacun à un sous-réseau respectif faisant partie du réseau.

13. Procédé selon l'une des revendications 1 à 12, dans lequel les caractéristiques extraites des séries temporelles comprennent des maximums, des minimums et/ou des moyennes.

14. Procédé selon l'une des revendications 1 à 13, dans lequel les caractéristiques extraites des séries temporelles comprennent des fréquences élémentaires, obtenues en particulier par décomposition des séries temporelles en séries de Fourier.

15. Procédé selon l'une des revendications 1 à 14, dans lequel en cas de détections d'une anomalie on analyse comparativement le vecteur courant avec les vecteurs précédents pour fournir des indications sur une vitesse d'évolution de l'anomalie et/ou un lien de l'anomalie avec au moins un paramètre conjoncturel et/ou une donnée structurelle.

## Patentansprüche

1. Verfahren zum Nachweis von Anomalien in einem Verteilernetz, insbesondere für Newtonsche Fluids, insbesondere für ein Trinkwasserversorgungsnetz, das mit Sensoren ausgestattet ist. In diesem Verfahren erfasst jeder Sensor zeitbasiert eine Serie von Maßnahmen des physischen Schutzes, die durch Zeitintervalle getrennt **dadurch gekennzeichnet** sind:
- es werden Beobachtungsfenster definiert, die jeweils mit einer Vielzahl von Zeitspannen angeordnet sind.
- es erfolgt das Extrahieren von Leistungsmerkmalen jeder Zeitspanne in einem Beobachtungsfenster,
- die Bildung mindestens einer aktuellen Einstellung der Vektorauflösung für jedes Zeitfenster mit den Koordinatenwerten der Betriebsmerkmale, grundlegende Strukturerhebungen des Verteilernetzes sowie konjunkturelle Charakteristika, die jedem Zeitfenster eigen sind,
- der Vergleich der aktuellen Einstellung der Vektorauflösung mit den vorhergehenden Vektoren, die den vorherigen Zeitspannen entsprechen sowie deren konjunktureller Charakteristika und Strukturdaten, deren Angaben sich denen des Spannungssektors gleichen, und
- die Meldung einer Anomalie, sollten sich die Werte der aktuellen Einstellung der Vektorauflösung signifikant von denen der vorhin angeführten Vektoren unterscheiden.

2. Verfahren gemäss Anspruch 1, in welchem zum Vergleich der aktuellen Einstellung der Vektorauflösung mit den vorhergehenden Vektoren ein Sensibilitätsniveau eingestellt wird, das den Mindestgrad der Unterschiedlichkeit definiert, so dass die Werte der aktuellen Einstellung der Vektorauflösung in ihrer Divergenz signifikant erhoben werden können.

3. Verfahren gemäss Anspruch 1 oder 2, in welchem zur Extrahierung der Charakteriska Zeitreihen aggregiert werden, um Datenpakete zu erheben.

4. Verfahren je nach einem der Ansprüche 1 bis 3, in welchem die konjunkturellen Charakteristika zumindest teilweise aus den Erfahrungshypothesen herausgehen.

5. Verfahren je nach einem der Ansprüche 1 bis 4, in welchem Anomaliefälle der aktuellen Einstellung der Vektorauflösung mit mindestens einem vorhergehenden Vektor mit ähnlich konjunkturellen Charakteristika sowie so nahe wie möglichen Betriebsmerkmalen der aktuellen Einstellung der Vektorauflösung verglichen werden und es mindestens ein Betriebsmerkmal angezeigt wird, für welches die aktuelle Einstellung der Vektorauflösung herausragende Unterschiede mit mindestens einem vorgehenden Vektor vorweist.

6. Verfahren je nach einem der Ansprüche 1 bis 5, in welchem man ein Vergleichsergebnis auf Gravitätsskala der Anomalie liefert.

7. Verfahren je nach einem der Ansprüche 1 bis 6, in welchem im Falle von mehreren simultanen Anomalien die Divergenzen je nach Notfall priorisiert und/oder je nach den Kriterien in Bezug auf das Ausmaß der entsprechenden Störungsbehebung erhoben werden.

8. Verfahren je nach einem der Ansprüche 1 bis 7, in welchem ein anomaliefreier Vektor im selben Speicherkompartiment wie andere Vektoren spürbar äquivalent klassifiziert ist. Und jedes Mal, wenn eine aktuelle Einstellung der Vektorauflösung kalkuliert wurde, recherchiert man ein Speicherkompartiment, das Werte der ähnlichsten vorherigen Vektoren enthält und vergleicht die aktuelle Einstellung für die Vektorauflösung nur mit den vorherigen Vektoren dieses Kompartiments .

9. Verfahren nach Anspruch 8, in welchem man ein neues Speicherkompartiment für einen Vektor strukturiert, dessen konjunkturelle Koordinaten und/oder die ensprechenden Koordinaten den Strukturdaten des Netzwerkes keinem existierenden Kompartiment entsprechen.

10. Verfahren je nach einem der Ansprüche 1 bis 9, in welchem die Entwicklung im Laufe der Zeit der Vektoren eines und demselben Kompartiments analysiert werden und man Informationen über die Entwicklung des Verteilernetzes liefert.

11. Verfahren nach Anspruch 10, in welchem man die Entwicklungen in den verschiedenen Kompartimenten vergleicht und die Informationen, die die Zustandsentwicklungen des Netzwerkes differenzieren sowie die Entwicklung der Konsequenzen auf die konjunkturellen Parameter auf das Verteilernetz erhebt.

12. Verfahren je nach einem der Ansprüche 1 bis 11, in welchem man für jede Zeitspanne mehrere Vektoren bereitstellt, die jeweils einem respektiven Subnetz ensprechen, das Teil des Verteilernetzes ist.

13. Verfahren je nach einem der Ansprüche 1 bis 12, in welchem die extrahierten Merkmale der Zeitreihen die Maximal-, Minimal- und/oder Mittelwerte ergreifen.

14. Verfahren je nach einem der Ansprüche 1 bis 13, in welchem die extrahierten Merkmale der Zeitreihen die Elementar-Frequenzlinien, die insbesondere durch die Dekomposition der Zeitreichen von Fourier-Serie erhalten wurden, ergreifen.

15. Verfahren je nach einem der Ansprüche 1 bis 14, in welchem man im Falle einer Anomalie-Detektion vergleichsweise die aktuelle Einstellung der Vektorauflösung mit den vorherigen analysiert, um Indikationen über eine Geschwindigkeitsentwicklung bereitzustellen und/oder einen Bezug der Anomalie mit mindestens einem konjunkturellen Parameter und/oder einem Strukturwert herzustellen.

## Claims

1. Method for detecting anomalies in a distribution network, in particular distributing a Newtonian fluid, and more particularly a network for supplying drinking water, the distribution network being equipped with sensors, in which method a time series of physical measurements separated by time intervals is acquired for each sensor, said method being **characterized by** the following steps:
- defining time windows each corresponding to a plurality of time intervals;
- extracting operational characteristics of each time series in each time window;
- forming, for each time window, at least one current vector having for coordinates the operational characteristics, structural data relating to the network and situational characteristics specific to the time window;
- comparing the current vector with preceding vectors corresponding to preceding time windows and the situational characteristics and structural data of which are similar to those of the current vector; and
- signalling an anomaly in cases where the current vector is significantly dissimilar to said preceding vectors.

2. Method according to Claim 1, wherein for the comparison of the current vector with the preceding vectors a sensitivity defining a minimum degree of dissimilarity is adjusted so that the current vector is qualified as significantly dissimilar.

3. Method according to Claim 1 or 2, wherein for the extraction of the characteristics, time series of measurements are aggregated.

4. Method according to one of Claims 1 to 3, wherein the situational characteristics are at least in part based on hypotheses resulting from experience.

5. Method according to one of Claims 1 to 4, wherein in case of an anomaly, the current vector is compared with at least one preceding vector having similar situational characteristics and operational characteristics as close as possible to those of the current vector, and at least one operational characteristic that differs greatly between the current vector and said at least one preceding vector is signalled.

6. Method according to one of Claims 1 to 5, wherein the result is delivered with reference to a severity scale of the anomaly.

7. Method according to one of Claims 1 to 6, wherein in case of a plurality of simultaneous anomalies the anomalies are prioritized as a function of their urgency and/or as a function of the magnitude of the corresponding corrective intervention.

8. Method according to one of Claims 1 to 7, wherein an anomaly-free vector is classed in the same memory compartment as other substantially equipollent vectors, and each time a current vector is calculated the memory compartment containing the prior vectors that most closely resemble said current vector the most is searched, and the current vector is compared only with the preceding vectors of this compartment.

9. Method according to Claim 8, wherein a new memory compartment is created for a vector if its situational coordinates and/or coordinates corresponding to structural data of the network do not correspond to any existing compartment.

10. Method according to one of Claims 1 to 9, wherein the variation over time of the vectors of a given compartment is analysed and information on the variation of the network is provided.

11. Method according to Claim 10, wherein the variations in the various compartments are compared and information is provided that distinguishes the variation due to the state of the network from the variation of the consequences of the situational parameters on the network.

12. Method according to one of Claims 1 to 11, wherein for each time window a plurality of vectors is provided, each corresponding to a respective subnetwork forming part of the network.

13. Method according to one of Claims 1 to 12, wherein the characteristics extracted from the time series comprise maxima, minima and/or averages.

14. Method according to one of Claims 1 to 13, wherein the characteristics extracted from the time series comprise elementary frequencies in particular obtained by decomposition of the time series into Fourier series.

15. Method according to one of Claims 1 to 14, wherein in case of detection of an anomaly the current vector is analysed comparatively with the preceding vectors in order to provide indications of a rate of variation of the anomaly and/or of a link between the anomaly and at least one situational parameter and/or a structural datum.
